# EUROPEAN PATENT SPECIFICATION

(11) **EP 1 662 755 B1**
(45) Date of publication and mention of the grant of the patent: **08.10.2008**
(21) Application number: 04028166.9
(22) Date of filing: 26.11.2004
(51) Int. Cl.: H04M 1/22

(54) **Mobile phone with luminescent keypad**
Bewegliches Telefon mit lumineszierender Tastatur
Téléphone mobile avec touches de clavier luminescentes

(43) Date of publication of application: 31.05.2006
(73) Proprietor: Sony Ericsson Mobile Communications AB, 221 88 Lund (SE)
(72) Inventor: Karlsson, Maiko, 224 57 Lund (SE); Lindström, Daniel, 224 73 Lund (SE)
(74) Representative: Körber, Martin Hans

(56) References cited:
- WO-A-92/09163
- US-A1- 2004 052 066
- US-A1- 2004 116 147
- US-A1- 2004 214 618
- US-B1- 6 263 070

## Description

### TECHNICAL FIELD OF THE INVENTION

The present invention relates to a mobile equipment for communication in a wireless communication system, such as the GSM, the UMTS or any other present or future wireless communication system, with a casing comprising a display means for displaying information, input means for inputting information and a light source for illuminating said input means.

### DESCRIPTION OF RELATED ART

The input means of a mobile equipment, e.g. a mobile phone and the like, comprises input keys enabling a user to input information such as characters, numbers, symbols and so forth into the mobile equipment. In most of the known mobile equipments, the input means is illuminated by one or more light sources enabling a user to input information into the equipment even in dark environments. Usually, the keypad being part of the input means is hereby formed of transparent or semi-transparent material by which the light from the one or more light sources is distributed. The one or more light sources are usually located close by or next to the keypad, e.g. underneath the keypad or sideways of it. Hereby, the one or more light sources and the keypad are usually located very close next to each other due to the space constraints within a mobile equipment. This, on the other hand, makes it difficult to sufficiently spread and distribute the light from the one or more light sources uniformly over the keypad and the input keys. It has to be kept in mind that it is important for a user that all input keys are illuminated equally.

US2004/214618 A1 discloses the provision of a luminescent material to fill the holes of the engraved characters of a translucent key mat.

WO 92/09163A discloses a mobile equipment for communication in a wireless communication system, with a casing comprising input means for inputting information and a light source for illuminating the input means. The input means comprises a luminescent material for enhancing the illumination of the input means in reaction to light emitted from a light source. The input means comprises a keypad with input keys and the keypad is made of transparent or semi-transparent material. The luminescent material is hereby provided in a luminescent panel which is located underneath the keypad and underneath a printed circuit board. The luminescent panel is an active panel which is variably illuminated by a control element via leads .

In the prior art systems, this can only be achieved by using a quite large number of light sources enabling a uniform and regular illumination of the keypad and the input keys. This, however, causes higher manufacturing costs and a higher power consumption.

### SUMMARY

The object of the present invention is therefore to provide a mobile equipment for communication in a wireless communication system with a casing comprising a display means for displaying information, input means for inputting information and at least one light source for illuminating the input means, which enables a uniform and regular illumination of the input means with reduced manufacturing costs and reduced power consumption.

The above object is achieved by a mobile equipment for communication in a wireless communication system according to claim 1. The input means of the mobile equipment according to the present invention comprises a luminescent material for enhancing the illumination of the input means in reaction to light emitted from the one or more light sources. The luminescent material absorbs light from the light source and re-emits light in reaction of the absorbed energy, hereby enabling a uniform and regular illumination of the input means.

As luminescent material, any kind of suitable material in any physical form having the property of absorbing light and emitting light in reaction to the absorbed light energy can be used.

Advantageously, the input means comprises a key pad with input keys extending through allocated openings of the casing of the mobile equipment, whereby the keypad is made of a transparent or semi-transparent material. Hereby, the transparent or semi-transparent material advantageously is silicon. In many mobile equipments the casing has predefined openings and the keypad is made of one piece of a soft plastics material comprising input key projecting or extending from some kind of base plate. When assembling the mobile equipment, the input keys are put through the corresponding openings in the casing from the inside of the casing so that the base plate of the keypad lies immediately underneath the casing surface and the input keys projecting from the keypad extend through the openings in the casing. The input keys can then be accessed by a user from the outside. Underneath the input keys, pressure sensing means are allocated which generate electronic signals in reaction to pressure applied by the finger of a user onto the input keys.

The luminescent material comprised in the input means can have any form or shape suited to support or enhance the uniform distribution of light from the one or more light sources. For example, the luminescent material can be applied as a coating to the surface of the input means visible for a user. Hereby, e.g. each input key can have a thin layer of luminescent material or of a material comprising luminescent material. Alternatively, the luminescent material can be embedded in the input means. Hereby, it is advantageous if the luminescent material is regularly distributed within the input means in order to enable a regular and uniform distribution of light. Hereby, the luminescent material advantageously comprises luminescent pigments. Advantageously, the luminescent pigments are fluorescent pigments. Generally, the luminescent material according to the present invention can e.g. be fluorescent or phosphorescent material. Fluorescent material is preferred since the conversion process or absorbing light and re-emitting light is much quicker as compared to phosphorescent materials.

The content of luminescent material comprised in the input means is advantageously 0,1% to 10% and more advantageously 0,5 to 2%.

The one or more light sources can be any kind of suitable light source. Advantageously, one or more light emitting diodes are used since light emitting diodes have a low energy consumption.

It is to be noted that the term "mobile equipment" comprises any kind of portable radio communication equipment such as mobile radio terminals, mobile telephones, cell phones, pagers, communicators, electronic organisers, smartphones or the like, which are able to transmit and/or receive signals in a wireless communication system. The wireless communication system can be any kind of present or future communication system, such as the GSM, the UMTS or any other system. Further, the term "comprises/comprising" when used in this specification is taken to specify the presence of stated features, integers, steps or components, but does not preclude the presence of addition of any more other features, integers, steps, components or groups thereof.

### BRIEF DESCRIPTION OF THE DRAWINGS

In the following, a preferred embodiment of the present invention is explained in more detail in relation to the enclosed drawings, in which
Fig. 1 schematically shows a front view of a mobile telephone according to the present invention, and
Fig. 2 schematically shows a cross section of the mobile telephone shown in Fig. 1.

### DETAILED DESCRIPTION OF EMBODIMENT

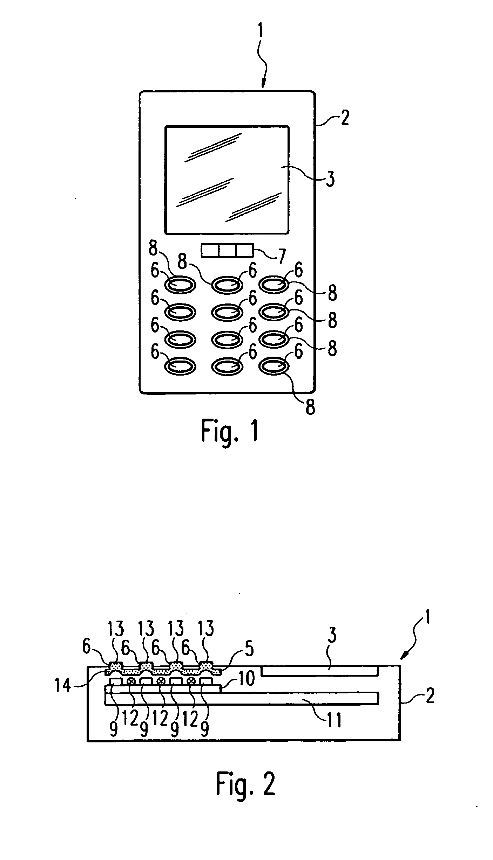

Fig. 1 shows a schematic view of a mobile telephone 1 according to the present invention. The mobile telephone 1 is hereby an example of a mobile equipment according to the present invention, which could be embodied in any kind of portable equipment suitable for the communication in a wireless communication system. For example, the mobile telephone 1 can be suitable for communication in the GSM or the UMTS or any other wireless communication system.

The mobile telephone 1 comprises a casing 2 of a hard plastics material or any other kind of suitable material able to hold the elements and components necessary for the operation of a mobile telephone 1. For example, the casing 2 could generally be formed of a lower half and an upper half which are screwed together or connected to each other by any kind of suitable connection. The mobile telephone 1 generally comprises a display 3 for displaying information and input means 6, 7 enabling a user to input information such as instructions, data and so on into the mobile telephone 1. The input means 6, 7 are e.g. embodied in input keys 6 enabling a user to input characters, numbers, symbols and a scroll key 7 enabling a user to scroll through menu items displayed on the display means 3 and to select menu items. Additionally or alternatively, any kind of suitable input means could be realised, such as buttons, wheels, pressure sensitive input keys and so forth.

The mobile telephone 1 further comprises all elements necessary for an operation in the wireless communication system, such as an antenna, a high frequency unit, baseband processor, memory and so forth. Hereby, the elements and components not necessary for the understanding of the present invention are not shown.

As becomes clear from Fig. 2, which shows a cross section of the mobile telephone of Fig. 1, the input keys 6 of the input means are part of a keypad comprising the input keys 6 and a base portion 5. The keypad is formed in one piece and is made of a soft plastics material, preferably a soft plastics material such as silicone, or any other suitable material. Also, the keypad could comprise a combination of different materials, for example a combination of plastics and silicone. Hereby, the keypad could e.g. have a plastics base plate on which a silicone part with the input keys is coated or moulded. Further, the keypad is transparent or semi-transparent. The input keys 6 extend through openings 8 in the casing 2 whereby the base portion 5 is located immediately under the adjacent surface part of the casing 2. Underneath the keypad, a pressure sensor 9 is located directly underneath each input key 6 in order to transform pressure exerted by the finger of a user pressing onto a respective input key 6 into electric signals. The pressure sensors 9 are located on a suitable board or plate 10. It is to be noted that the keypad with the input keys 6 and the base portion 5 can have any suitable shape. In the example shown in Fig. 2, the base portion 5 has small dents or openings underneath each input key 6 facilitating the depression of the input key 6 by a user. The pressure sensors 9 can be of any suitable kind. The electric signals generated by the pressure sensors 9 are further processed in a suitable processing means of the mobile telephone 1 located on a printed circuit board or printed wiring board 11.

Close to or next to the keypad are located one or more light sources 12, e.g. light emitting diodes or any other kind of suitable light source. The light sources 12 in the example shown in Fig. 2 are located inbetween the pressure sensors 9 on the board 10. Hereby, the light sources 12 are located directly underneath the portions of the base plate 5 where the input keys are not provided. The number and the specific location of the light sources 12 depends on the material of the keypad and the illumination power of the light sources. However, it might be advantageous to arrange the light sources 12 in a regular and uniform arrangement in relation to the openings 8 and the input keys 6 in view of a regular illumination of the key pad.

According to the present invention, the keypad comprises a luminescent material. The luminescent material can be provided in any physical form and shape in or on the keypad in order to support and enhance the regular and uniform illumination of the keypad by the light sources 12. For example, a thin film of luminescent material can be applied as a coating on the surface 13 of each input key 6. Alternatively or additionally, a thin film of luminescent material can be applied to the keypad inbetween the input keys. Alternatively or additionally, the luminescent material can be embedded in the surface 13 of each input key 6 or can be formed as a thin film layer on each surface 13 of each input key 6. Further alternatively or additionally, the luminescent material can be embedded in form of luminescent pigments 14 into the material of the keypad. Hereby, it is advantageous if the luminescent pigments are regularly distributed within the material of the keypad, i.e. regular distributed in the input keys 6 as well as in the base plate 5. Hereby, the weight ratio between the luminescent pigments 14 and the keypad material is preferably between 20% and 60% and most preferably between 30% and 50%.

The luminescent material can be any kind of material which absorbs light and re-emits light in reaction to the absorbed light energy. Advantageously, fluorescent material is used. On the other hand, for specific applications it can be advantageous to use phosphorescent material which has a slower conversion process of absorbing and re-emitting light as compared to fluorescent materials.

The provision of a luminescent material in the keypad of a mobile telephone 1 as described enables to reduce the number of light sources 12 and therefore a reduction of the power consumption within the mobile telephone 1 by maintaining a sufficient and uniform illumination of the keypad. Even if the number of light sources 12 is not reduced, the power required to achieve a certain degree of illumination in the keypad is lower than in the prior art.

## Claims

1. Mobile equipment (1) for communication in a wireless communication system, with a casing (2) comprising a display means (3) for displaying information, input means (5) for inputting information and a light source (12) for illuminating said input means,
wherein the input means comprises a luminescent material (13; 14) for enhancing the illumination of the input means in reaction to light emitted from the light source (12),
wherein the input means comprises a keypad (5) with input keys (6) extending through allocated openings (8) of the casing, said keypad (5) being made of a transparent or semitransparent material,
whereby said luminescent material comprises luminescent pigments (14) **characterised in that** the luminescent pigments are embedded and regularly distributed within said keypad (5).

2. Mobile equipment (1) according to claim 1,
wherein said transparent or semitransparent material is silicon.

3. Mobile equipment (1) according to claim 1 or 2,
wherein said luminescent pigments are fluorescent pigments.

4. Mobile equipment (1) according to one of the preceding claims,
wherein the content of luminescent material comprised in said input means (5) is preferably 0,1% to 10%, most preferably 0,5% to 2%.

5. Mobile equipment (1) according to one of the preceding claims,
wherein the light source comprises one or more light emitting diodes.

## Patentansprüche

1. Mobiles Gerät (1) zur Kommunikation in einem Funkkommunikationssystem, mit einem Gehäuse (2), welches ein Anzeigemittel (3) zur Anzeige von Informationen, ein Eingabemittel (5) zur Eingabe von Informationen und eine Lichtquelle (12) zur Beleuchtung des Eingabemittels aufweist,
wobei das Eingabemittel ein lumineszierendes Material (13; 14) enthält, welche die Beleuchtung des Eingabemittels entsprechend dem von der Lichtquelle (12) ausgehenden Licht verstärkt,
wobei das Eingabemittel ein Tastenfeld (5) mit Eingabetasten (6) aufweist, die aus dafür vorgesehenen Öffnungen (8) im Gehäuse hervorstehen, und das Tastenfeld aus einem transparenten oder halbtransparenten Material besteht,
wobei das lumineszierende Material Leuchtpigmente (14) enthält, die **dadurch gekennzeichnet sind, dass** sie im Tastenfeld (5) eingebettet und regelmäßig verteilt sind.

2. Mobiles Gerät (1) nach Anspruch 1,
wobei das transparente oder halbtransparente Material Silikon ist.

3. Mobiles Gerät (1) nach Anspruch 1 oder 2,
wobei die Leuchtpigmente fluoreszierend sind.

4. Mobiles Gerät (1) nach einem der vorstehenden Ansprüche,
wobei der Gehalt des im Eingabemittel (5) enthaltenen lumineszierenden Materials vorzugsweise 0,1 % bis 10 %, am besten 0,5 % bis 2 % beträgt.

5. Mobiles Gerät (1) nach einem der vorstehenden Ansprüche,
wobei die Lichtquelle eine oder mehrere Leuchtdioden aufweist.

## Revendications

1. Équipement mobile (1) destiné à communiquer dans un système de communication sans fil, ayant un boîtier (2) comprenant un moyen d'affichage (3) destiné à afficher des informations, un moyen de saisie (5) destiné à saisir des informations et une source lumineuse (12) destinée à éclairer ledit moyen de saisie, le moyen de saisie comprenant un matériau luminescent (13 ; 14) afin d'améliorer l'éclairage du moyen de saisie, en réaction à la lumière émise par la source lumineuse (12), le moyen de saisie comprenant un clavier (5) avec des touches de saisie (6) qui s'étendent au travers d'ouvertures (8) ménagées dans le boîtier, ledit clavier (5) étant fait dans un matériau transparent ou semi-transparent, ledit matériau luminescent comprenant des pigments luminescents (14), **caractérisé en ce que** les pigments luminescents sont incorporés dans ledit clavier (5) et régulièrement répartis dans celui-ci.

2. Équipement mobile (1) selon la revendication 1, dans lequel ledit matériau transparent ou semi-transparent est du silicium.

3. Équipement mobile (1) selon la revendication 1 ou 2, dans lequel lesdits pigments luminescents sont des pigments fluorescents.

4. Équipement mobile (1) selon l'une quelconque des revendications précédentes, dans lequel la teneur en matériau luminescent contenu dans ledit moyen de saisie (5) est avantageusement de 0,1 % à 10 %, de préférence de 0,5 % à 2 %.

5. Équipement mobile (1) selon l'une quelconque des revendications précédentes, dans lequel la source lumineuse comprend une ou plusieurs diodes électroluminescentes.
